# EUROPEAN PATENT APPLICATION

(11) **EP 4 137 403 A1**
(43) Date of publication of application: **22.02.2023**
(21) Application number: 20931037.4
(22) Date of filing: 14.04.2020
(51) Int. Cl.: B64C 27/08

(54) **MULTICOPTER AND METHOD FOR DRIVING SAME**

(71) Applicant: KAWASAKI JUKOGYO KABUSHIKI KAISHA, Kobe-shi, Hyogo 650-8670 (JP)
(72) Inventor: HANAMITSU, Akira, Kobe-shi, Hyogo 650-8670 (JP); SUZUKI, Masahiro, Kobe-shi, Hyogo 650-8670 (JP)
(74) Representative: Betten & Resch
(86) International application number: PCT/JP2020/016413
(87) International publication number: WO 2021/210062

(57) **Abstract**

A multicopter 1 is provided with: a support body 10; multiple rotors 21 provided to the support body 10; an engine 32 which is provided to the support body 10 and capable of varying the output thereof; an electric generator 31 which is supported by the support body 10 and generates electricity by being driven by the engine 32; a capacitor 43 which is provided to the support body 10; multiple motors 22 which are provided to the support body 10, which are configured to be capable of supplying electricity from the electric generator 31 and the capacitor 43, and which drive the multiple rotors 22 respectively; a flight control computer 45a which controls the attitude of the multicopter main body by adjusting the revolving speeds of the respective rotors 21; and a power plant control computer 45b which controls the electric power to be generated by controlling both the engine 32 and the electric generator 31 in accordance with a control instruction given by the flight control computer 45a.

## Description

### TECHNICAL FIELD

The present invention relates to a multicopter and a method for driving the same.

### BACKGROUND ART

The multicopter disclosed in Patent Document 1 uses a battery as a main power supply source. In addition, the multicopter supplies power generated by a power generation unit to the battery when the remaining battery level of the battery becomes lower than a threshold value.

### PRIOR ART DOCUMENT

### PATENT DOCUMENT

Patent Document 1: JP 2016-88110 A

### SUMMARY OF THE INVENTION

### PROBLEMS TO BE SOLVED BY THE INVENTION

However, in the multicopter described in Patent Document 1, when the remaining level of one battery decreases, the motor is driven by the power of another battery. While the motor is driven by the other battery, a power generation apparatus that charges power consumed by the one battery is mounted. Therefore, an entire power unit increases in size and weight.

An object of the present invention is to provide a multicopter that can withstand long-time flight while preventing an increase in size and weight of a power unit, and a driving method thereof.

### MEANS FOR SOLVING THE PROBLEMS

A first aspect of the present invention provides a multicopter including:
a support body;
a plurality of rotors supported by the support body;
at least one internal combustion engine supported by the support body and configured to change an output;
a generator supported by the support body and driven by the at least one internal combustion engine to generate power;
a capacitor provided in the support body;
a plurality of electric motors provided in the support body, configured to supply electric power from the generator and the capacitor, and configured to drive each of the rotors;
a flight control computer configured to control an attitude of an airframe by individually adjusting rotor speeds of each of the rotors; and
a powerplant control computer configured to control the at least one internal combustion engine and the generator according to a control command from the flight control computer to control generated power.

According to this configuration, the internal combustion engine having a power density (kW/kg) several times higher than that of a lithium ion battery is used as a main power source, and the capacitor capable of instantaneously discharging a large current as compared with a battery is used as an auxiliary power storage apparatus, so that the entire power unit can be reduced in size and weight. Here, the power unit refers to a power generation apparatus (the internal combustion engine and the generator) and a power storage apparatus (the capacitor). In addition, in the attitude control of the airframe, even when a power demand difference is instantaneously generated due to a response delay of the internal combustion engine, excess or deficiency fluctuation of the supply power to the plurality of electric motors can be absorbed by the capacitor. Furthermore, the capacitor only needs to have sufficient capacitance to compensate for the response delay of the engine, and an increase in size of the power storage apparatus can be prevented. In this manner, it is possible to provide a multicopter that can withstand long-time flight while preventing an increase in size and weight of a power unit, and a driving method thereof.

A second aspect of the present invention provides a method for driving a multicopter including a controller configured to control an attitude by adjusting rotor speeds of each of rotors, the method including:
a power generation driving step of rotating the rotors by electric power generated by driving of an internal combustion engine; and
a discharge driving step of rotating the rotors by electric power supplied from a capacitor in a transient state in which an output of the internal combustion engine is changed.

### EFFECTS OF THE INVENTION

According to the present invention, it is possible to provide a multicopter that can withstand long-time flight while preventing an increase in size and weight of a power unit, and a driving method thereof.

### BRIEF DESCRIPTION OF THE DRAWINGS

Fig. 1 is a plan view showing an overall configuration of a multicopter according to an embodiment of the present invention;
Fig. 2 is a side view showing an overall configuration of a multicopter according to an embodiment of the present invention;
Fig. 3 is an electrical configuration diagram of a multicopter according to an embodiment of the present invention;
Fig. 4 is a characteristic diagram of an internal combustion engine of a multicopter according to an embodiment of the present invention; and
Fig. 5 is a characteristic diagram of an internal combustion engine of a multicopter according to a modification.

### MODE FOR CARRYING OUT THE INVENTION

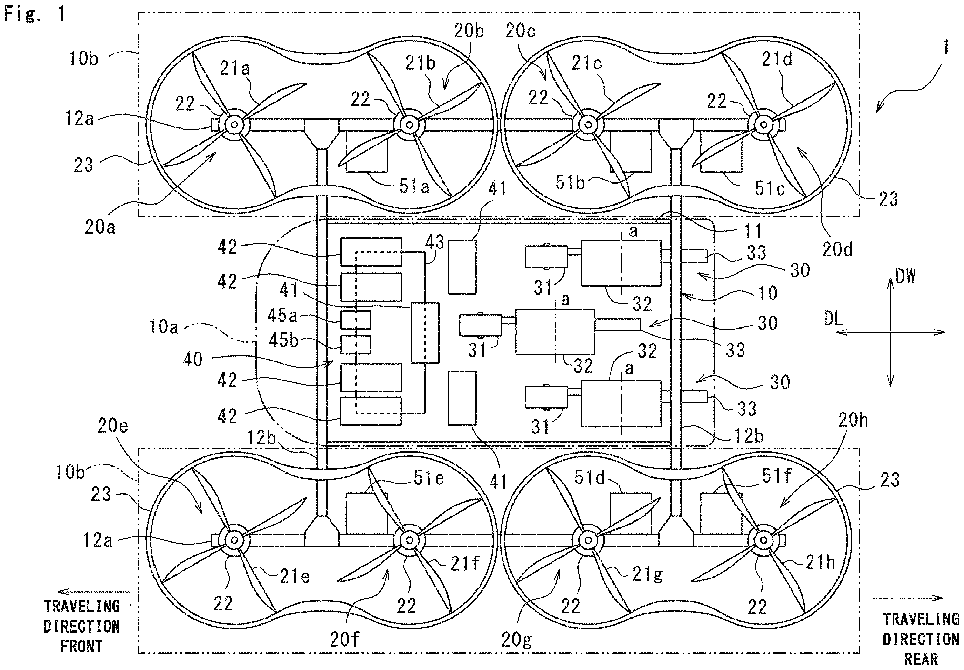

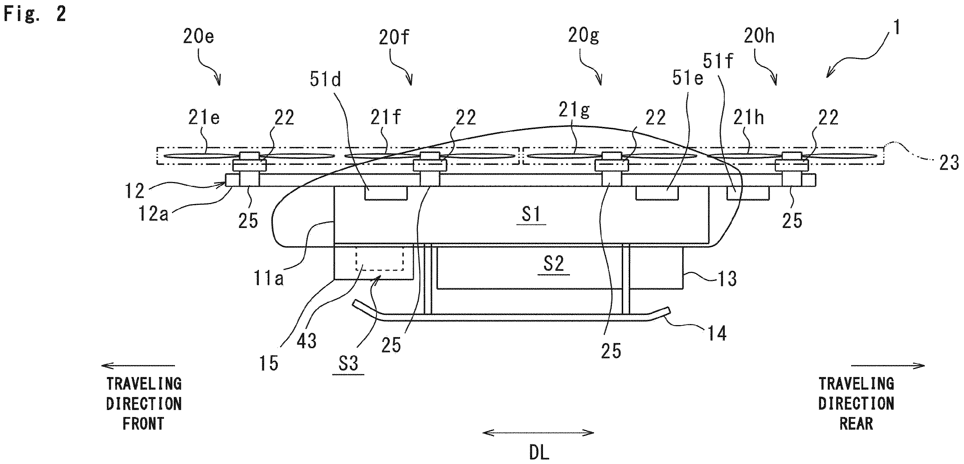

A configuration of a multicopter 1 according to an embodiment of the present invention will be described with reference to Figs. 1 and 2.

The multicopter 1 in the present embodiment can perform attitude control by individually rotation-controlling a plurality of rotors 21 by respective electric motors 22. The inclination and the rotation axis of the rotor 21 are maintained at predetermined fixed values.

In the multicopter 1 of the present embodiment, an engine 32 which is an internal combustion engine is used as a drive source of the rotor 21. The multicopter 1 converts the mechanical output generated by the engine 32 into power by a generator 31. The multicopter 1 supplies the electric power generated in this manner to the motor 22 to rotate the rotor 21. The multicopter 1 of the present embodiment flies by driving the plurality of rotors 21 by the power of the motors 22, and the engine 32 is used only for power generation. In other words, in the multicopter 1 of the present embodiment, the power of the engine 32 does not directly drive the plurality of rotors 21.

The multicopter 1 of the present embodiment includes a plurality of rotors 21, a motor 22 individually provided for each of the plurality of rotors 21, a plurality of engines 32, a plurality of generators 31, a controller 45 for controlling each motor 22, and a support body 10 for supporting these components.

The multicopter 1 of the present embodiment includes a rotor unit 20 unitized including a rotor 21, a motor 22, and an inverter 42, and a power generation unit 30 unitized including an engine 32, a generator 31, and a converter 41.

In the multicopter 1, a predetermined reference plane and an orthogonal direction orthogonal to the reference plane are set. The rotor blades of each rotor 21 extend substantially along the reference plane. In other words, the rotation axis of each rotor 21 extends substantially along the orthogonal direction.

As shown in Fig. 1, a case where a reference plane set to the multicopter 1 extends horizontally will be described as a reference attitude of the multicopter 1. Hereinafter, unless otherwise specified, description will be made based on the reference attitude. In the reference attitude, the rotor blades of each rotor 21 extend substantially along a horizontal plane. The rotation axis of each rotor 21 extends substantially along the vertical direction. Therefore, in the reference attitude, the multicopter 1 has lift generated in the vertical direction.

The respective rotors 21 are spaced apart from each other in the horizontal direction. Each rotor 21 is disposed at a position in a plan view, away from the position of the center of gravity of the multicopter 1 and surrounding the position of the center of gravity.

In the multicopter 1, in a plan view, a fuselage region 10a including the position of the center of gravity of the multicopter 1 and adjacent to the plurality of rotors 21, and a rotor-side region 10b positioned closer to the plurality of rotors 21 with respect to the fuselage region 10a are defined. In a plan view, the fuselage region 10a is a region inside a polygon connecting the rotation axes of the plurality of rotors 21. In the present embodiment, in a plan view, the fuselage region 10a is formed in an elongated shape. In a plan view, the long side direction of the fuselage region 10a may be referred to as an airframe front-rear direction DL, and the short side direction of the fuselage region may be referred to as an airframe width direction DW. The airframe front-rear direction DL is a direction parallel to the direction in which the airframe travels. It should be noted that the airframe front-rear direction DL and the airframe width direction DW are named for easy understanding, and may be independent of the traveling direction and the airframe shape. In this case, the airframe front-rear direction DL is a first direction extending parallel to the reference plane, and the airframe width direction DW is a second direction extending parallel to the reference plane and orthogonal to the first direction. In the present embodiment, the plurality of rotors 21 are arranged on each side of the fuselage region 10a in the airframe width direction DW. Specifically, in the multicopter 1, four rotors 21a to 21d aligned in the airframe front-rear direction DL are arranged on one side of the fuselage region 10a in the airframe width direction DW. In addition, the other four rotors 21e to 21h aligned in the airframe front-rear direction DL are arranged on the other side of the fuselage region 10a in the airframe width direction DW.

The support body 10 includes a body frame 11 disposed in the fuselage region 10a and a rotor support frame 12 disposed in the rotor-side region 10b. The body frame 11 supports many parts except the rotor 21. The body frame 11 constitutes a strength member of the multicopter 1 and includes at least a portion constituting a framework. The body frame 11 supports a fuselage apparatus disposed in the fuselage region 10a. In other words, the body frame 11 defines a fuselage apparatus loading space S1 (see Fig. 2) in which the fuselage apparatus is loaded. For example, the fuselage apparatus includes each power generation unit 30 described above and a power supply apparatus for supplying the power generated by the power generation unit 30 to each motor 22. In the present embodiment, the body frame 11 may be formed in a basket shape formed by a plurality of pillars. In the present embodiment, a body housing 11a is fixed to the body frame 11, and a fuselage apparatus is disposed in an internal space of the body housing 11a.

The rotor support frame 12 is connected to the body frame 11, and has a portion protruding outward from the fuselage region 10a in a plan view. The rotor support frame 12 supports the motor 22 to which the rotor 21 is attached. The rotor support frame 12 transmits the lift generated by the rotation of each rotor 21 to the body frame 11. As a result, the entire multicopter 1 is configured to be able to fly together with the plurality of rotors 21. In the present embodiment, the rotor support frame 12 is formed in a ladder shape and includes a rotor support member 12a and a lateral frame 12b. A pair of the rotor support members 12a is disposed on the outer sides in the airframe width direction DW with respect to the body frame 11 and extends in the airframe front-rear direction DL. The pair of rotor support members 12a supports respective two sets of four rotors 21a to 21d and 21e to 21h aligned in the airframe front-rear direction DL. The lateral frame 12b connects the pair of rotor support members 12a. Specifically, the lateral frame 12b extends in the airframe width direction DW to connect the pair of rotor support members 12a. The lateral frame 12b is connected to the body frame 11. In other words, each rotor support frame 12 is fixed to the body frame 11 through each lateral frame 12b. In the present embodiment, the fuselage apparatus loading space S1 is defined between the pair of lateral frames 12b in the airframe front-rear direction DL. In the present embodiment, the fuselage apparatus loading space S1 is arranged below the positions where the rotor blades of the plurality of rotors 21 are arranged.

In the present embodiment, the multicopter 1 includes a luggage room housing 13 that covers the luggage room S2 on which the load is loaded. The luggage room housing 13 is disposed in the fuselage region 10a and is supported by the body frame 11. In the flight state of the multicopter 1, the luggage room S2 is disposed at a position overlapping with the fuselage apparatus loading space S1 of the body frame 11 in the vertical direction as viewed in a plan view. Specifically, the luggage room S2 is disposed below the fuselage apparatus loading space S1. The luggage room S2 can protect the load from wind, rain, and the like by being covered by the luggage room housing 13. In addition, a wall for partitioning a space in the vertical direction is formed between the luggage room S2 and the fuselage apparatus loading space S1. The luggage room S2 is positioned in a fuselage region 10a closer to the rear in the front-rear direction of the support body 10.

In the present embodiment, the multicopter 1 includes an auxiliary room housing 15 that covers the auxiliary room S3 in which the auxiliary component is loaded, separately from the luggage room S2. The auxiliary room housing 15 is disposed in the fuselage region 10a and is supported by the body frame 11. In the flight state of the multicopter 1, the auxiliary room S3 is disposed at a position overlapping with the fuselage apparatus loading space S1 of the body frame 11 in the vertical direction in a plan view. Specifically, the auxiliary room S3 is disposed below the fuselage apparatus loading space S1. By forming the auxiliary room S3, a region where a component can be mounted can be expanded downward. The auxiliary room S3 can protect the auxiliary component from wind, rain, and the like by being covered by the auxiliary room housing 15. In addition, a wall for partitioning a space in the vertical direction is formed between the auxiliary room S3 and the fuselage apparatus loading space S1. The auxiliary room S3 is disposed at a position shifted in the horizontal direction with respect to the luggage room S2. In the present embodiment, the auxiliary room S3 is positioned in a fuselage region closer to the front in the airframe front-rear direction. In other words, the auxiliary room S3 is aligned in the front-rear direction with respect to the luggage room S2, and is disposed in front of the luggage room S2 in the airframe front-rear direction DL. In the present embodiment, a capacitor 43 described below is housed in the auxiliary room S3. As described above, since the capacitor 43 is disposed away from the generator 31 and the engine 32, the influence due to heat from these components can be suppressed.

A landing gear 14 that comes into contact with the ground when the multicopter 1 is grounded is connected to the body frame 11. The landing gear 14 protrudes downward from the body frame 11. Since the landing gear 14 is formed, the multicopter 1 can stably stand by itself in a grounded state. In the present embodiment, the grounding portion of the landing gear 14 is formed to protrude downward from the fuselage apparatus loading space S1, the luggage room S2, and the auxiliary room S3. In other words, the fuselage apparatus loading space S1 and the luggage room S2 are disposed between the rotor blades of the plurality of rotors 21 and the grounding portion of the landing gear 14 in the vertical direction.

Each rotor 21 is disposed in the rotor-side region 10b. That is, each rotor 21 is positioned on each side in the airframe width direction of the body frame 11, and is disposed at a position not overlapping with the fuselage region 10a in a plan view. The rotors 21a to 21d are attached in alignment in the airframe front-rear direction DL to the rotor support member 12a on one side in the airframe width direction DW of the fuselage region 10a. The rotors 21e to 21h are attached in alignment in the airframe front-rear direction DL to the rotor support member 12a on the other side in the airframe width direction DW of the fuselage region 10a. In a plan view, the adjacent respective rotors 21 are arranged, at intervals, at positions shifted from each other in the airframe front-rear direction DL and the airframe width direction DW, that is, at positions not overlapping with each other.

Each rotor unit 20 includes a rotor 21 for applying thrust to the multicopter 1, a motor 22 as an electric motor that rotates a rotating shaft by being supplied with electric power, and an inverter 42 for applying drive power to the motor 22. Each rotor 21 is fixed to, for example, a rotor portion of the motor 22 with a bolt or the like. A stator portion of the motor 22 is fixed to the rotor support frame 12. This causes the motor 22 to rotate the rotor 21 around the rotation axis. Each motor 22 is fixed to the rotor support member 12a through the motor mounting member 25. In the present embodiment, each motor 22 is achieved by an AC motor. It should be noted that an inverter 42 constituting a part of each rotor unit 20 is disposed on the airframe front side in the fuselage region 10a.

As described above, the rotor unit 20 is provided with motors 22 corresponding to the respective rotors 21 and inverters 42 corresponding to the respective rotors 21. The controller 45 individually controls each of the motors 22 through a corresponding one of the inverters 42, whereby the rotor 21 can be individually rotation-controlled. As described above, the controller 45 can change the attitude angle by individually controlling each motor 22 to make the magnitude of the lift generated in each rotor 21 different. In this manner, the controller 45 can control the attitude during flight and the flight propulsion.

In the present embodiment, each rotor 21 is a fixed pitch type in which the pitch angle of the rotor blades is fixed. The multicopter 1 can be simplified in structure as compared with a case where the pitch angle is configured to be variable, and can achieve improvement in maintainability and weight reduction. In addition, by rotating the rotor 21 by the motor 22, the structure can be simplified as compared with a case of rotating the rotor 21 by the rotation of the engine 32, maintainability can be improved and weight can be reduced, and further, responsiveness until the rotor speed changes according to a control command by the controller 45 can be enhanced.

The multicopter 1 includes a rotor cover 23 that covers each rotor 21 from the radial outside of the rotating shaft. The rotor cover 23 can prevent an object from approaching a rotation region of the rotor 21. Furthermore, contact of an object with the rotor 21 can be prevented and the rotor 21 can be protected. The rotor cover 23 is fixed to the rotor support member 12a. The rotor cover 23 is formed in a tubular shape opened in the vertical direction. In the present embodiment, in a plan view, the rotor cover 23 is formed in a substantially elongated hole shape that covers four sets of two rotors 21a and 21b, 21c and 21d, 21e and 21f, and 21g and 21h aligned in the airframe front-rear direction DL.

Each power generation unit 30 includes an engine 32 as an internal combustion engine and a generator 31 driven by the engine 32. In addition, each power generation unit 30 includes a converter 41 which is a primary power conversion apparatus that converts the power generated by the generator 31. In other words, the power generation unit 30 includes an internal combustion engine unit including the engine 32, the generator 31, and the converter 41. It should be noted that the generator 47 and the converter 41 are one of the electrical equipment 40 (what is called power electrical equipment) for supplying driving electric power for supplying electric power for rotationally driving the rotor 21, and all the electrical equipment 40 are disposed on the airframe front side in the fuselage region 10a.

In the present embodiment, the multicopter 1 flies mainly by a driving force generated by engine driving. Specifically, the engine 32 rotates an engine output shaft by combustion of fuel. The engine 32 has an output shaft thereof connected to an input shaft of a generator so as to be capable of transmitting power. The generator 31 converts mechanical rotational force into electric power by the input shaft which is rotated by the engine 32. By being electrically connected to the generator 31, the converter 41 adjusts AC power supplied from the generator 31 and supplies power to the inverter 42 which is a secondary power conversion apparatus described below. The inverter 42 converts the DC power converted by the converter 41 into AC power suitable for driving the motor 22 and gives the AC power to the motor 22.

In the present embodiment, the multicopter 1 includes three power generation units 30. When power is transmitted from the engine 32 to the generator 31, a speed reducer (not shown) that reduces the RPM of the power is interposed. Each power generation unit 30 is formed in the same structure. This makes it possible to prevent an increase in the number of component types and improve maintainability.

As shown in Fig. 1, the engine 32 constituting a part of each power generation unit 30 is disposed in a rear region in the airframe front-rear direction DL in the fuselage apparatus loading space S1. In the present embodiment, the region where the engine 32 is disposed is an upper region of the luggage room S2. Similarly to the engine 32, each generator 31 is arranged in a rear region in the airframe front-rear direction DL in the fuselage apparatus loading space S1. In addition, each generator 31 is disposed on the front side in the airframe front-rear direction DL with respect to the engine 32 from which the power is transmitted.

The respective engines 32 are arranged side by side in the airframe width direction DW. Adjacent engines 32 of the respective engines 32 are disposed at positions shifted from each other in the airframe front-rear direction DL. Specifically, the engine 32 at the central portion in the airframe width direction DW is disposed in the airframe-front with respect to the other engines 32 disposed outside in the airframe width direction DW. With this arrangement, it is possible to form a large gap around the adjacent engines 32 as compared with a case where the respective engines 32 are aligned and arranged in the airframe width direction DW. Accordingly, the movement of the surrounding air warmed by the combustion of the fuel of the engine 32 can be easily promoted. This makes it possible to suppress the temperature rise of the air in the body housing 11a. In addition, by forming a large gap around the engine 32, maintainability of the engine 32 can be improved. For example, the rear end surface of the engine 32 at the central portion in the airframe width direction DW may be positioned in front of the front end surface of the adjacent engine 32. As a result, it is easy to access the engine 32 at the center in the airframe width direction DW from the airframe side, and it is possible to further prevent deterioration in maintainability of the engine 32 at the center in the airframe width direction DW.

In the present embodiment, each engine 32 is disposed so that the output axis a extends in the airframe width direction DW. As described above, since the adjacent engines 32 are arranged to be shifted in the airframe front-rear direction DL, the engines 32 can be also arranged to overlap each other in the airframe width direction DW, and it is possible to prevent an increase in size of the multicopter 1 in the airframe width direction DW. It should be noted that the arrangement of the output axis a may be arranged to extend in the airframe front-rear direction DL, for example.

On the front side in the airframe front-rear direction DL of each of the engines 32, a corresponding one of the generators 31 is disposed. Each of the generators 31 is connected to a corresponding one of the engines 32 through a chain which is a power transmission mechanism. In the present embodiment, a transmission is connected to an output shaft of the engine 32, and a RPM suitable for power generation of the generator 31 is achieved by deceleration by the transmission and the power transmission mechanism (sprocket). Similarly to the engines 32, the respective generators 31 are arranged side by side in the airframe width direction DW, and the adjacent generators 31 are arranged at positions shifted in the airframe front-rear direction DL. The engine 32 and the generator 31 corresponding to the engine 32 are configured to be aligned in the airframe front-rear direction DL. The generator 31 and the engine 32 may be directly connected.

Each engine 32 is connected with an exhaust pipe 33 for discharging exhaust generated by combustion into the atmosphere. The exhaust pipe 33 is connected to an exhaust port of each engine 32, and discharges exhaust rearward in the airframe front-rear direction DL of the engine 32. Specifically, the exhaust pipe 33 extends rearward in the traveling direction from the exhaust port of the engine 32. In the present embodiment, since the exhaust port of the engine 32 is directed to rearward in the airframe front-rear direction DL with respect to the engine main body, the exhaust pipe 33 can be easily disposed behind the engine 32. In addition, since the outlet portion of the exhaust pipe 33 is formed so as to protrude to the outside of the body housing 11a, it is possible to prevent the exhaust of the engine 32 from flowing into the body housing 11a. It should be noted that the exhaust pipe 33 preferably includes a muffler portion serving as a silencer, and the muffler portion is preferably disposed outside the body housing 11a. Accordingly, a temperature rise in the body housing 11a can be further prevented. In addition, it is preferable that the intake port of the engine 32 faces airframe-forward with respect to the engine main body. Accordingly, interference between the intake pipe that guides intake air to the engine 32 and the exhaust pipe 33 can be prevented. In addition, an air cleaner and an intake pipe for filtering intake air guided to the engine 32 are preferably disposed in airframe-front with respect to the engine 32. As a result, it is possible to guide intake air having a low temperature to the engine 32 while suppressing the influence due to exhaust air.

A fuel tank (not shown) serving as a fuel supply source to each engine 32 is disposed in front of each generator 31. Since each fuel tank is disposed in front of the engine, it is possible to make the fuel tank less susceptible to heat from the engine 32 and the exhaust pipe 33. Each fuel tank is connected to the engine 32 through a fuel tube (not shown). It should be noted that although each fuel tank is provided for a corresponding engine 32 in the present embodiment, one fuel tank may be provided in common for each engine 32.

The converter 41 constituting a part of the power generation unit 30 is disposed adjacent to the corresponding generator 31. Each converter 41 is disposed on the front side in the airframe front-rear direction DL in the fuselage region 10a, more specifically, in front in the airframe front-rear direction DL with respect to each generator 31. Accordingly, the electrical wiring line that electrically connects the generator 31 and the converter 41 can be shortened. Similarly to the engines 32, the respective converters 41 are arranged side by side in the airframe width direction DW.

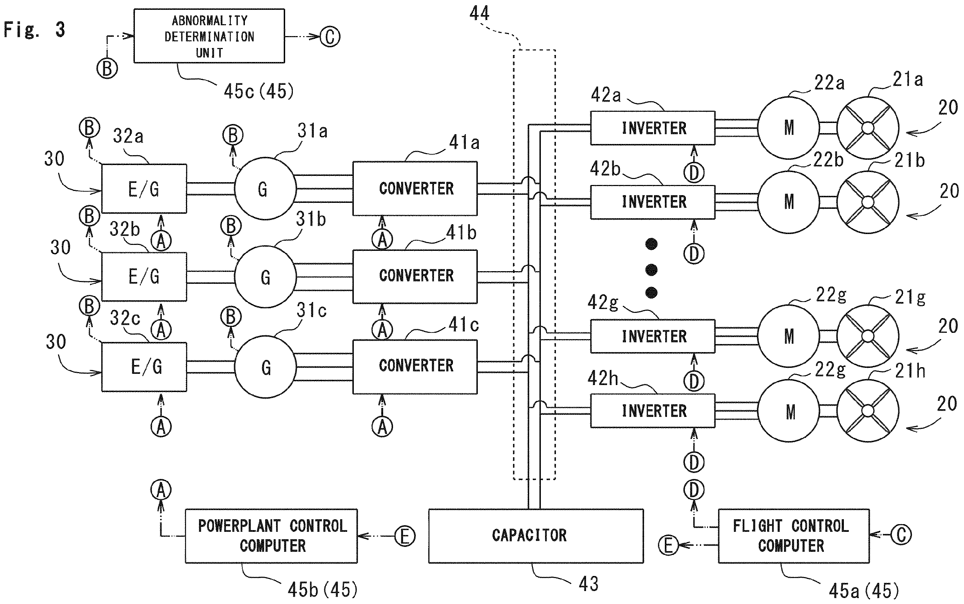

In the present embodiment, the power generated by the power generation unit 30 is supplied to the rotor unit 20 through the aggregated electric circuit 44. Specifically, as shown in Fig. 3, the respective converters 41 constituting some of the respective power generation units 30 are connected in parallel to the aggregated electric circuit 44. Accordingly, in the aggregated electric circuit 44, the power generated by each power generation unit 30 is aggregated. In addition, the respective inverters 42 constituting some of the respective rotor units 20 are connected in parallel to the aggregated electric circuit 44. Accordingly, the aggregated electric circuit 44 is configured to be able to supply the aggregated electric power to the respective rotor units 20. The capacitor 43 which is a power storage apparatus is electrically connected in series with the aggregated electric circuit 44 and electrically connected in parallel with the power generation unit 30. That is, the generator 31 and the capacitor 43 are connected in parallel to the aggregated electric circuit 44 that supplies power to the plurality of motors 22. Accordingly, the capacitor 43 is configured to be able to transfer power to and from the aggregated electric circuit 44, and can suppress the fluctuation in the output power supplied to the inverter 42 due to the output fluctuation of the engine 32. In addition, without depending on the control of the powerplant control computer 45b described below, the capacitor 43 discharges to prevent a voltage decrease when the voltage of the aggregated electric circuit 44 decreases, and charges power to prevent a voltage increase when the voltage increases. Accordingly, it is possible to respond to the instantaneous required power fluctuation associated with the attitude control and the like more quickly than the adjustment of the power generation amount by the powerplant control computer 45b without requiring special control. It should be noted that the RPM of the generator 31 is maintained constant, and thus the voltage to be generated is controlled to be constant. Coping with the power fluctuation is adjusted by changing the throttle opening changes the torque serving as the load (that is, changing the current to the generator 31). That is, when the capacitor 43 is discharged to decrease the voltage and decrease the RPM, the throttle is opened to increase the power generation amount in order to compensate for the decrease. In addition, the power generation fluctuation caused by the engine pulsation due to using the capacitor 43 can also be suppressed.

The capacitor 43 is also referred to as a condenser, and has a structure in which charge is housed by a voltage that is applied between conductors. In the present embodiment, the capacitor 43 is disposed at a position close to the aggregated electric circuit 44 and the inverter 42. Specifically, the capacitor 43, the aggregated electric circuit 44, and the inverter 42 are arranged adjacent to each other in the vertical direction. Accordingly, the electronic apparatus system can be compactly arranged, and the power in the capacitor 43 can be promptly supplied to each inverter 42.

As described above, the controller 45 includes a flight control computer 45a that controls the flight and the attitude of the multicopter 1 and a powerplant control computer 45b that controls the power supply to the motor 22. It should be noted that the flight control computer 45a and the powerplant control computer 45b are configured separately in the present embodiment, but may have an integrated structure.

The flight control computer 45a reads a flight control program stored in the storage unit, and calculates the RPM of an individual motor 22 necessary for the flight calculation unit to have a predetermined flight and attitude based on position information and gyro information obtained by a GPS and a gyro sensor (not shown). The flight control computer 45a controls an individual inverter 42 according to the calculation result.

The powerplant control computer 45b reads a control program stored in the storage unit, and acquires information detected by various sensors provided in the power generation unit 30 and the like. The powerplant control computer 45b controls at least one of the engine 32 and the generator 31 in accordance with a control command from the flight control computer 45a to control the generated power. Specifically, the powerplant control computer 45b includes a calculation unit that controls the engine 32 and the converter 41 so that the power supply amount to the motor 22 becomes appropriate. For example, the powerplant control computer 45b controls the engine 32 to have a constant RPM. In addition, the powerplant control computer 45b gives a torque command of the generator 31 to the converter 41. In addition, the powerplant control computer 45b controls the power generation unit 30 (at least one of the engine 32 and the generator 31) so that the voltage of the aggregated electric circuit 44 falls within a specified value that is predetermined. For example, the powerplant control computer 45b controls to increase the power generation amount when the voltage of the aggregated electric circuit 44 is lower than the predetermined value, and controls to decrease the power generation amount when the voltage of the aggregated electric circuit 44 is higher than the predetermined value.

The respective converters 41, the respective inverters 42, the flight control computer 45a, and the powerplant control computer 45b are disposed on the front side of the airframe in the fuselage region 10a, more specifically, in front in the airframe front-rear direction DL with respect to the respective generators 31. The capacitor 43 is housed in the auxiliary room housing 15. The electrical equipment 40 include power electrical equipment for driving a rotor (a generator 31, a converter 41, an inverter 42, a motor 22, and a capacitor 43) and light electronic components (control system electrical equipment including a sensor and a flight control computer for flight control). The engine 32 is disposed behind the electrical equipment 40. It should be noted that an electrical configuration in the multicopter 1 will be described below.

The multicopter 1 includes a cooling circuit for cooling each engine 32, each motor 22, and electrical equipment for supplying power. In particular, the cooling circuit is to cool the generator 31, the converter 41, and the inverter 42. The cooling circuit of the present embodiment includes a cooling portion that draws heat from a heat generating portion provided in the multicopter by the refrigerant, a heat dissipating portion that exchanges heat of the refrigerant that takes away heat with the atmosphere to dissipate heat, a refrigerant circulation passage that circulates the cooling medium over the cooling portion and the heat dissipating portion, and a pump for circulating the refrigerant in the circulation passage. The cooling circuit includes a plurality of radiators 51 serving as heat exchangers constituting a heat dissipating portion. The plurality of radiators 51 are fixed to a pair of left and right rotor support members 12a.

The radiators 51a to 51f are disposed at symmetrical positions in the airframe width direction DW. The radiators 51a to 51c are disposed corresponding to the rotors 21b to 21d, respectively, and the radiators 51d to 51f are disposed corresponding to the rotors 21f to 21h, respectively.

Each radiator 51 is disposed at a position shifted from the motor 22 of each rotor unit 20 in a plan view, that is, at a position not overlapping with the motor 22. Each radiator 51 is disposed in a region where the airflow guided by the rotor 21 flows. For example, each radiator 51 is disposed at a position overlapping with the rotation region of the rotor blade of the rotor 21 in a plan view. In the present embodiment, each radiator 51 is disposed at a position below the rotor blades of the rotor 21. Accordingly, in the flight state, each radiator 51 can promote heat exchange by the downward airflow generated by the rotation of each rotor 21, and heat dissipation performance can be improved.

In the above configuration, the multicopter 1 may be, for example, a large one having a total length of 5 m or more and a loadable amount of 100 kg or more. In addition, all of the rotors 21a to 21h have the same size, and have a diameter of, for example, 1.3 m or more.

Next, an electrical configuration of the multicopter 1 will be described with reference to Fig. 3.

As described above, in the present embodiment, the multicopter 1 includes a capacitor 43. For example, when the sum of the power supplied to the rotor unit 20 is temporarily larger than the sum of the power generated by the respective power generation units 30, the multicopter 1 supplies power from the capacitor 43 to the rotor unit 20. In addition, when the sum of the power generated by the respective power generation units 30 is temporarily larger than the sum of the power supplied to the rotor unit 20, the multicopter 1 charges the capacitor 43.

In the multicopter 1 of the present embodiment, three power generation units 30 are connected in parallel to the aggregated electric circuit 44. In addition, eight rotor units 20 are connected in parallel to the aggregated electric circuit 44.

In each power generation unit 30, a corresponding engine 32 is mechanically connected in a power transmittable manner to a corresponding generator 31. The power generation units 30 cause the respective engines 32 to drive the generators 31a to 31c to generate AC power. The pieces of AC power generated by the respective generators 31 are converted into pieces of DC power through the corresponding converters 41. The pieces of power converted into the DC by the respective converters 41 are aggregated by the aggregated electric circuit 44 and then supplied to the respective inverters 42.

The pieces of DC power supplied to the respective inverters 42 are converted into pieces of three-phase AC power and the pieces of three-phase AC power are supplied to the corresponding motors 22. In the present embodiment, an electrical component that adjusts the power supplied from each generator 31 to each motor 22 in this manner is referred to as a power adjustment circuit. Specifically, the power adjustment circuit refers to each converter 41, the aggregated electric circuit 44, and each inverter 42.

As described above, each motor 22 is mechanically connected in a power transmittable manner to a corresponding one rotor 21. When the respective motors 22 receive electric power and are driven, the corresponding rotors 21a to 21h are driven.

In addition, the capacitor 43 is electrically connected to the aggregated electric circuit 44, and the capacitor 43 first responds to power requests from the motors 22. When the voltage of the aggregated electric circuit 44 decreases due to the power supply to the rotor units 20, the power generation units 30 are controlled to increase the power generation amount and keep the voltage constant at the target value. In contrast, when surplus power is generated, since the voltage of the aggregated electric circuit 44 increases, the power generation units 30 are controlled to reduce the power generation amount and keep the voltage constant at the target value. As described above, without depending on the control of the powerplant control computer 45b, the capacitor 43 discharges to prevent a voltage decrease when the voltage of the aggregated electric circuit 44 decreases, and charges power to prevent a voltage increase when the voltage increases. Accordingly, it is possible to respond to the instantaneous required power fluctuation associated with the attitude control and the like more quickly than the adjustment of the power generation amount by the powerplant control computer 45b without requiring special control.

In the present embodiment, in order to control the above-described electrical configuration, the controller 45 including the flight control computer 45a and the powerplant control computer 45b is provided.

The powerplant control computer 45b controls each engine 32 and each converter 41 so that the voltage of the aggregated electric circuit 44 is maintained at a predetermined value. For example, the powerplant control computer 45b operates the torque commands of the converters 41 to maintain the RPM of the respective engines 32 at a constant value and to maintain the voltage of the aggregated electric circuit 44 at a constant value. This enables stable flight of the multicopter 1, and suppresses overcharge and overdischarge of the capacitor 43 as well. In addition, by controlling the powerplant control computer 45b so that when the voltage of the aggregated electric circuit 44 is lower than the voltage of the capacitor 43, discharge from the capacitor 43 is executed, and when the voltage of the aggregated electric circuit 44 is higher than the voltage of the capacitor 43, charging of the capacitor 43 is executed, the power supply after being compensated by the capacitor 43 can be borne by the generator 31.

The flight control computer 45a controls the rotor speed of each rotor 21 for flight control of the multicopter 1. Specifically, the flight control computer 45a individually controls the inverters 42a to 42h in order to respectively control the rotor speeds of the rotors 21a to 21h. Accordingly, the multicopter 1 can perform a flight operation required in a stable attitude.

Specifically, in order to perform the requested flight operation, the flight control computer 45a calculates the rotor speed required for each rotor 21 according to the requested flight operation, and outputs the rotor speed command to the inverter 42. On the other hand, the powerplant control computer 45b outputs an accelerator opening command necessary for keeping the RPM of the engine 32 constant to the engine 32, and outputs a torque command to the converter 41 to control the power generation amount.

In the adjustment of the power generation amount as described above, since the time from when the flight control computer 45a issues the RPM command to when each power generation unit 30 completes the response is dominated by the response speed of the engine 32, the response speed is slow. Therefore, when the capacitor 43 is not provided, the output response due to the power generation is not in time under the attitude control in which a response for a significantly short time, such as to maintain the attitude in a disturbance such as wind, is required, and the control may be lost.

The multicopter 1 of the present embodiment is provided with the capacitor 43 as described above. The capacitor 43 can instantaneously charge and discharge a large current. To that end, the capacitor 43 first responds supplementarily to the instantaneous power demand for attitude control, and compensates for the delay of the output response of the engine 32. For example, when an instantaneous increase in the output of the motor 22 is required due to a disturbance state such as a gust of wind, the capacitor 43 immediately starts supplying power to the aggregated electric circuit 44 to compensate for the response delay of each power generation unit 30.

The capacitor 43 has capacitance necessary for suppressing the fluctuation of the required power due to the short-time response of the motors 22. That is, the capacitor 43 is provided so as to have capacitance capable of compensating for the power necessary for the attitude control of the airframe from when the engine 32 receives the output change command to when the output is changed. Accordingly, the power shortage caused by the output change by the engine 32 can be compensated by the capacitor 43. Specifically, the capacitance of the capacitor 43 may be 100 Wh or more and 1000 Wh or less in terms of power amount. This minimum capacitance corresponds to a case where the voltage fluctuation allowable range of the converter 41 is maximally used, and flight is enabled with standard load fluctuation (standard flight conditions). This maximum capacitance corresponds to a case where the flight can withstand even with larger load fluctuation (strict flight conditions) while having an appropriate margin for the voltage fluctuation allowable range of the converter 41. It should be noted that the capacitance range of the capacitor 43 is not limited to the above-described range, and can be appropriately changed according to the airframe weight, the inertia moment of the airframe, the flight conditions, the margin, and the like.

According to the above configuration, the engine 32 having a power density (kW/kg) several times higher than that of a lithium ion battery is used as a main power source, and the capacitor 43 capable of instantaneously discharging a large current as compared with a battery is used as an auxiliary power storage apparatus, so that the entire power unit can be reduced in size and weight. Here, the power unit refers to a power generation apparatus (the engine 32 and the generator 31) and a power storage apparatus (the capacitor 43). In addition, in the attitude control of the airframe, even when a power demand difference is instantaneously generated due to a response delay of the internal combustion engine, excess or deficiency fluctuation of the supply power to the plurality of motors 22 can be absorbed by the capacitor 43. Furthermore, the capacitor 43 only needs to have sufficient capacitance to compensate for the response delay of the engine 32, and an increase in size of the power storage apparatus can be prevented. In this manner, the multicopter 1 that can withstand long-time flight while preventing an increase in size and weight of the power unit is achieved.

Next, the flight mode of the multicopter 1 will be described.

A plurality of flight modes switchable during flight is set in the multicopter 1 of the present embodiment. In the plurality of flight modes, for example, as the flight modes, a normal flight mode when all of the power generation units 30 and the rotor units 20 operate normally, and an abnormal flight mode when one of the three power generation units 30, or eight rotor units 20, operate abnormally are set. Each of these flight modes is set according to the output range of the engine 32. That is, each of these flight modes is set so that each of the output ranges for maintaining the output of the engine 32 within a certain range is different from each other. Since the output range is different for each flight mode, it is possible to easily secure an output appropriate for each flight mode by switching the output for each flight mode.

In addition, in order to determine the abnormality of the above-described power generation unit 30, the controller 45 includes an abnormality determination unit 45c (see Fig. 3). When detecting the abnormality of each power generation unit 30 or each rotor unit 20, the abnormality determination unit 45c transmits information on detecting the abnormality to the powerplant control computer 45b or the flight control computer 45a. For example, the abnormal state may be determined by a sensor provided in the engine 32. For example, when the temperature of the cooling water (refrigerant) exceeds a predetermined range, or when a known abnormal state such as a control abnormality of the RPM of the engine 32, an operation abnormality of the injector and the throttle controller, or an abnormality of the fuel supply apparatus is determined, it may be determined as an abnormality of the engine 32. In addition, the abnormal state may be determined when individual electrical characteristic values (current, voltage, resistor, short circuit, disconnection, and the like) of the power generation unit 30 exceed a predetermined range.

When receiving information on detecting an abnormality from the abnormality determination unit 45c in a state of controlling in the normal flight mode at the time of normality, the powerplant control computer 45b, the flight control computer 45a, or both are switched from the normal flight mode to the abnormal flight mode. It should be noted that the abnormality determination method by the abnormality determination unit 45c can be any mode.

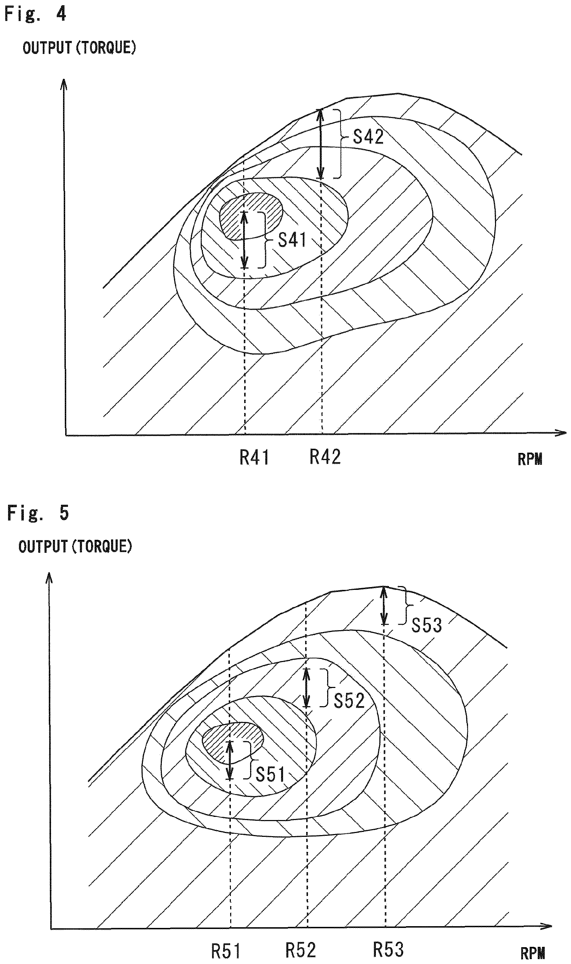

The normal flight mode and the abnormal flight mode will be described with reference to Fig. 4.

In the graph in Fig. 4, the horizontal axis represents the RPM of the engine 32, and the vertical axis represents the output (torque or load) of the engine 32. An upwardly protruding arched curved line in the graph indicates the maximum output of the engine 32 at each rotational speed. That is, the curved line indicates a state in which the output of the engine 32 is 100%.

The engine 32 of the present embodiment has the following characteristics. The output of the engine 32 gradually increases as the RPM increases and approaches a predetermined peak RPM. In the engine 32, the output becomes the maximum value when the RPM reaches the peak RPM, and the output gradually decreases when the RPM exceeds the output maximum RPM. The fuel consumption is distributed in a stripe shape (contour line shape), and the fuel consumption deteriorates as the RPM and output are away from a region where the fuel consumption is good (stripe-shaped central portion, region having high oblique line density). The output (load or torque) is set within a certain range as a characteristic of the generator 31.

In Fig. 4, a reference output range S41 is set as an output range corresponding to the normal flight mode. The maximum value of the reference output range S41 needs to be equal to or larger than the maximum value of the output required in all flight states including the disturbance in the normal flight mode. In addition, a high output range S42 is set as an output range corresponding to the abnormal flight mode. The powerplant control computer 45b controls to keep the RPM of the engine 32 constant, but when an abnormality is detected, the powerplant control computer 45b can switch the control RPM of the engine 32 at which no abnormality is detected from the reference RPM R41 to the high output RPM R42.

The reference RPM R41 is an engine RPM at which the fuel consumption is near the maximum. The reference RPM R41 is set to be, for example, 60% or more and less than 85% of the maximum RPM.

The high output RPM R42 is a RPM at which the RPM of the engine 32 is larger than the reference RPM R41 (R42 > R41). When detecting an abnormality, the powerplant control computer 45b secures high output by switching the control RPM of the engine 32 at which no abnormality is detected from the reference RPM R41 to the high output RPM R42. In addition, even when there is no abnormality, the RPM may be switched to the high output RPM R42 in a flight requiring high output such as a flight at a high altitude.

In the normal flight mode, each engine 32 is driven at the reference RPM R41. In the abnormal flight mode, those not determined to be abnormal of the respective engines 32 are driven at the high output RPM R42. In addition, those determined to be abnormal of the respective engines 32 (the respective generators 31) are caused to stop driving as the power generation units 30. In this way, it is possible to select the flight mode in the reference output range S41 in which fuel consumption is prioritized and the flight mode in the high output range S42 in which high output is required, and it is possible to easily fly according to the situation.

Preferably, in the abnormal state and the non-abnormal state, the total amount of power supplied from the power generation unit 30 to the aggregated electric circuit 44 is controlled to be in the same range. For example, when n power generation units 30 are provided, let the corresponding one output by each power generation unit 30 in the normal mode be X, and assuming that m power generation units 30 are determined to have failed, it is preferable that, in the abnormal mode, the corresponding one abnormal-time output Y by each power generation unit 30 not determined to be abnormal is (n . X)/(n - m). The abnormal-time output Y may be a value in which an allowable range allowable in each electrical equipment 40 is taken into consideration. Accordingly, the generated power in the abnormal state can be equal to or close to the generated power before the abnormality, and the decrease in the output in the abnormal state can be suppressed. For example, when three power generation units 30 are mounted and one power generation unit 30 is determined to be in failure, in the failure mode, it is preferable that the power generation unit 30 not determined as in failure is set to have an output 1.5 times that in the normal mode.

According to the present embodiment, when an abnormality is detected in at least one power generation unit 30 among the power generation units 30, the other power generation units 30 generate power with a higher output than that in the normal state. This makes it possible to suppress a decrease in power in an abnormal state. Accordingly, a problem such that motive power of the multicopter 1 decreases can be avoided, and the reliability of the multicopter 1 can be improved. In addition, since in the normal flight mode, the output of the engine 32 can be made lower than the output in the abnormal flight mode, the load on the engine 32 can be reduced. In the present embodiment, it has been exemplified that the output in the abnormal state is made different by making the RPM region of the engine 32 different.

### (Modification)

As a modification, a flight mode different from that of the above embodiment may be set. For example, three output ranges corresponding to the flight mode may be set. Specifically, referring to Fig. 5, an output range S51 corresponding to a cruise flight mode, an output range S52 corresponding to a hovering flight mode, and an output range S53 corresponding to an abnormal flight mode may be set. Here, the cruise flight mode is a mode in which propulsion flight is performed. The hovering flight mode is a mode in which hovering is performed while staying still in the air without performing propulsion. In the present modification, the cruise flight mode and the hovering flight mode correspond to the normal flight mode when all of the power generation units 30 operate normally.

In general, cruise flight requires less output than hovering flight because lift is available. Therefore, the output range S51 in the cruise flight mode is lower than the output range S52 in the hovering flight mode. That is, the output range S51 used for the cruise flight is the reference output range, and the output range S52 used for the hovering flight is the high output range. When the RPM of the engine 32 is the high output RPM R52 during cruise flight, the output is controlled by narrowing the throttle. However, in general, the larger the throttle opening, the better the fuel consumption. Therefore, the fuel consumption can be improved by lowering the RPM of the engine 32 to the reference RPM R41 and making the throttle opening range the same. Furthermore, by lowering the RPM in this manner, the load on the engine 32 can be reduced, and durability can be also improved. As described above, by dividing the output range to be used according to the flight mode, it is possible to achieve both the output and the fuel consumption and to perform the high fuel consumption operation. In addition, even when the RPM of the engine 32 is changed, the voltage is maintained by the function of the converter 41. Accordingly, the engine 32 does not always maintain a constant RPM, but can change the RPM as necessary. It should be noted that the response delay caused by the switching of the flight mode can be compensated by the capacitor 43 as described above.

In the example in Fig. 5, in the magnitude relationship among the respective output ranges S51, S52, and S53, the output range S51 is the lowest, the output range S52 is the second lowest, and the output range S53 is the highest (S53 > S52 > S51). In addition, the RPM corresponding to the output ranges S51, S52, and S53 are set as R51, R52, and R53, respectively. In the magnitude relationship among the RPM R51, R52, and R53, the RPM R51 is the smallest, the RPM R52 is the second smallest, and the RPM R53 is the largest (R53 > R52 > R51).

According to the present modification, durability can be improved by suitably switching the RPM between in the cruise flight mode and in the hovering flight mode, and a decrease in output as the multicopter 1 can be suppressed even when an abnormality occurs in any one of the power generation units 30 by providing the abnormal flight mode.

As described above, three or more flight modes may be set. For example, as another flight mode example, an additional flight mode may be set depending on the presence or absence of the payload. For example, the flight mode may be made different between the cruise state without payload and the cruise state with payload. For example, in the hovering state without payload, the output for each power generation unit may be set to the same extent as in the cruise state with payload.

As described above, although the specific embodiment of the present invention is described, the present invention is not limited to the above-described embodiment, and can be implemented with various modifications within the scope of the present invention.

In addition, the number of flight modes may be one. Since the suppression according to the load fluctuation can be prevented even with one flight mode, it is possible to achieve an effect that a long-time flight can be withstood while the power storage apparatus is prevented from increasing in size.

The shape of the multicopter 1 is an example of implementation and may have another structure. For example, the number of rotors is not limited to eight, and has only to be three or more. In addition, the frame structure also may be another structure. For example, a case where the rotor support frame 12 extends radially with respect to the fuselage region 10a may be used. In addition, it is preferable that a plurality of power generation units 30 are provided, but a case where only one power generation unit 30 is provided is also included in the present invention. In other words, the number of the generators 31 and the engines 32 is not particularly limited in the present invention, and may be one.

In the above embodiment, the fuel consumption in each flight mode is set based on the RPM of the engine, but the present invention is not limited thereto. For example, in consideration of the efficiency of the engine 32 (output that can be taken out per unit fuel) and the efficiency of the generator 31 (power generation amount with respect to the input), a region in which the efficiency of the entire power generation unit 30 (power that can be output per unit fuel) is satisfactory may be set as the normal output.

### DESCRIPTION OF SYMBOLS

- 1: Multicopter
- 10: Support body
- 21: Rotor
- 22: Motor (electric motor)
- 30: Power generation unit
- 31: Generator
- 32: Engine (internal combustion engine)
- 33: Exhaust pipe
- 40: Electrical equipment
- 41: Converter
- 42: Inverter
- 43: Capacitor
- 44: Aggregated electric circuit
- 45: Controller
- 45a: Flight control computer
- 45b: Powerplant control computer
- 45c: Abnormality determination unit
- S2: Luggage room

## Claims

1. A multicopter comprising:
a support body;
a plurality of rotors supported by the support body;
at least one internal combustion engine supported by the support body and configured to change an output;
a generator supported by the support body and driven by the at least one internal combustion engine to generate power;
a capacitor provided in the support body;
a plurality of electric motors provided in the support body, configured to supply electric power from the generator and the capacitor, and configured to drive each of the rotors;
a flight control computer configured to control an attitude of an airframe by individually adjusting rotor speeds of each of the rotors; and
a powerplant control computer configured to control the at least one internal combustion engine and the generator according to a control command from the flight control computer to control generated power.

2. The multicopter according to claim 1, wherein the capacitor is provided to have a capacitance capable of compensating for electric power necessary for an attitude control of completing a change of an output of the airframe before the at least one internal combustion engine after receiving an output change command.

3. The multicopter according to claim 1 or 2, wherein the generator and the capacitor are connected in parallel with respect to an aggregated electric circuit that supplies power to the electric motors.

4. The multicopter according to claim 3, wherein
the powerplant control computer controls the at least one internal combustion engine and the generator so that a voltage applied to the aggregated electric circuit falls within a specified range that is predetermined, and
the capacitor is configured to transfer power to and from the aggregated electric circuit.

5. The multicopter according to any one of claims 1 to 4, wherein
a plurality of flight modes switchable during flight are provided, and
a RPM of the at least one internal combustion engine is switched for each of the flight modes.

6. The multicopter according to claim 5, wherein
The at least one internal combustion engine is provided to have an output variable between in a reference output range in which output is enabled at a predetermined reference RPM and in a high output range in which a high output is output at a high output RPM higher than the predetermined reference RPM, and
the flight modes include a flight mode set correspondingly to the reference output range and a flight mode correspondingly to the high output range.

7. The multicopter according to claim 6, wherein
the flight mode in the reference output range is used for cruise flight, and
the flight mode in the high output range is used for hovering flight.

8. The multicopter according to claim 6 or 7, wherein
the at least one internal combustion engine comprises a plurality of internal combustion engines,
the multicopter further comprises an abnormality determination unit configured to determine whether an abnormality in at least one of the internal combustion engines and the generator has been occurred,
the flight mode in the reference output range is used for a flight when the abnormality determination unit determines that no abnormality has occurred, and
the flight mode in the high output range is used for a flight in case where the abnormality determination unit determines that an abnormality has been occurred.

9. A method for driving a multicopter including a controller configured to control an attitude of a support body by adjusting rotor speeds of each of rotors provided in the support body, the method comprising:
a power generation driving step of rotating the rotors by electric power generated by driving of an internal combustion engine; and
a discharge driving step of rotating the rotors by electric power supplied from a capacitor in a transient state in which an output of the internal combustion engine is changed.
